# EUROPÄISCHE PATENTSCHRIFT

(11) **EP 1 839 906 B1**
(45) Veröffentlichungstag und Bekanntmachung des Hinweises auf die Patenterteilung: **24.09.2008**
(21) Anmeldenummer: 07005737.7
(22) Anmeldetag: 21.03.2007
(51) Int. Cl.: B60B 35/04, B60G 9/00, B60G 21/055, B60G 11/44

(54) **Starrachse eines Nutzfahrzeugs**
Rigid axle of a commercial vehicle
Essieu rigide d'un véhicule utilitaire

(30) Priorität: 31.03.2006 DE 102006015119
(43) Veröffentlichungstag der Anmeldung: 03.10.2007
(73) Patentinhaber: MAN Nutzfahrzeuge Aktiengesellschaft, 80976 München (DE)
(72) Erfinder: Streicher, Manfred, 80995 München (DE); Hintereder, Jürgen, 85586 Poing (DE); Umling, Wilhelm, 85764 Oberschleißheim (DE)

(56) Entgegenhaltungen:
- EP-A2- 1 275 574
- DE-A1- 3 535 783
- DE-A1- 4 338 651
- JP-A- 7 215 004
- US-A- 274 341
- US-A- 462 181
- US-A- 1 760 613
- US-A- 1 765 066
- US-A1- 2004 056 398

## Beschreibung

Die Erfindung bezieht sich auf eine Starrachse eines Nutzfahrzeugs insbesondere eines Lastkraftwagens oder Omnibusses, mit einem gegossenen oder geschmiedeten Achskörper.

Aus der DE 28 47 035 A1 ist eine Faustachse für Nutzfahrzeuge bekannt, die einen zylindrischen Lenkzapfen aufweist, auf dessen, über die Achsfaust hinausragenden Endteilen der Achsschenkel drehbar gelagert ist. Der Mittelteil sowie eines der Endteile des Lenkzapfens weisen den gleichen Durchmesser auf. Das obere Endteil des Lenkzapfens ist im unteren Durchmesser geringfügig stärker als das untere Endteil und das Mittelteil ausgebildet. Der Übergang vom Mittelteil zum oberen Endteil ist durch eine Schulter gebildet, über die der Lenkzapfen auf den Achskörper stirnseitig aufsitzt. Weitere relevante Starrachsen, entsprechend dem Oberbegriff des Anspruchs 1 sind aus den Dokumenten JP 07215004, US 2004/0056398, DE 43 38 651 und EP 1 275 574 bekannt.

Moderne Nutzfahrzeughersteller fertigen Fahrzeuge, die sich beispielsweise in Bezug auf ihre Geländegängigkeit und ihre Achslast unterscheiden. Die Modelvielfalt der Fahrzeughersteller erfordert dabei, dass die Achsen für die entsprechenden Anforderungen eines jeden Fahrzeugtyps individuell neu entworfen werden müssen.

Es ist die Aufgabe der Erfindung, entsprechend eines Baukastensystems unabhängig von der erforderlichen Verwindungssteifigkeit des Achskörpers einen Achskörper zu schaffen, der in allen Modellen einer Fahrzeugpalette einsetzbar ist.

Diese Aufgabe wird erfindungsgemäß dadurch gelöst, dass der Achskörper an seiner Längsseite durch ein Winkelprofil versteift ist, dass an mindestens zwei Seiten des Achskörpers anliegt.

Vorteilhaft ist, dass die Erfindung für alle im Nutzfahrzeugbau vorkommenden Starrachsen anwendbar ist. Die erfindungsgemäße Versteifung durch ein Winkelprofil ist bei gelenkten-, angetriebenen- und Vor- und Nachlaufachsen einsetzbar (siehe z. B. US 4, 310,200). Unabhängig von der Fahrzeuggröße bzw. der erforderlichen Verwindungssteifigkeit von Fahrzeugrahmen und Fahrzeugachse kann der entsprechende Achskörper in einer normierten Größe aber entsprechend den individuellen Anforderungen versteift, in die unterschiedlichen Nutzfahrzeugtypen eingebaut werden. Im Weiteren wird beispielhaft von einer vorderen Starrachse ausgegangen. Mit Hilfe des erfindungsgemäßen Winkelprofils ist es möglich, die normierte vordere Starrachse entsprechend dem für sie vorgesehenen Nutzfahrzeugtyp zu versteifen, so dass der normierte Achskörper für ein leichtes, für den Straßenverkehr ausgelegtes Nutzfahrzeug ebenso einsatzfähig ist, wie für ein allradgetriebenes Schwerlastfahrzeug, das für den Einsatz in schwerem Gelände konzipiert ist. Die Erfindung lässt sich in vorteilhafter Weise unabhängig von der Art der Herstellung der Achse z. B. an gegossenen oder geschmiedeten Achskörpern einsetzen.

Gemäß einer weiteren Ausführungsform liegt das Winkelprofil zumindest mit einem Schenkel flächig an dem Achskörper an.

Nach einer weiteren Ausführungsform der Erfindung ist zumindest ein Schenkel des Winkelprofils in Bezug zur Fahrbahn aufrecht stehend an dem Achskörper befestigt.

Nach einer anderen Ausführungsform der Erfindung weist der Achskörper ein Doppel-T-Profil auf und der aufrecht stehende Schenkel des Winkelprofils ist in etwa parallel zu dem Profilsteg des Achskörpers angeordnet.

Nach einer weiteren Ausführungsform der Erfindung ist das Winkelprofil im Bereich seiner Enden an dem Achskörper befestigt.

Nach einer weiteren Ausführungsform der Erfindung ist mit den Schrauben, mit denen ein Stabilisator am Achskörper befestigt ist, gleichen Orts auch das Winkelprofil am Achskörper angeordnet.

Nach einer anderen Ausführungsform der Erfindung ist das Winkelprofil im Bereich der die Fahrzeugfederung tragende Platte des Achskörpers an diesem befestigt.

Weitere vorteilhafte Ausgestaltungen und zweckmäßige Fortbildungen der erfindungsgemäßen Starrachse ergeben sich aus der Beispielsbeschreibung anhand der nachfolgenden Zeichnung. Hierbei zeigen:
- Fig. 1: in Gesamtansicht einen Achskörper mit Winkelprofil und ausschnittweiser Darstellung eines Stabilisators,
- Fig. 2: jeweils seitlich geschnitten, einen Achskörper und ein daran angeordnetes Winkelprofil und
- Fig. 3: in Seitenansicht ein an einem Achskörper angeordnetes Winkelprofil.

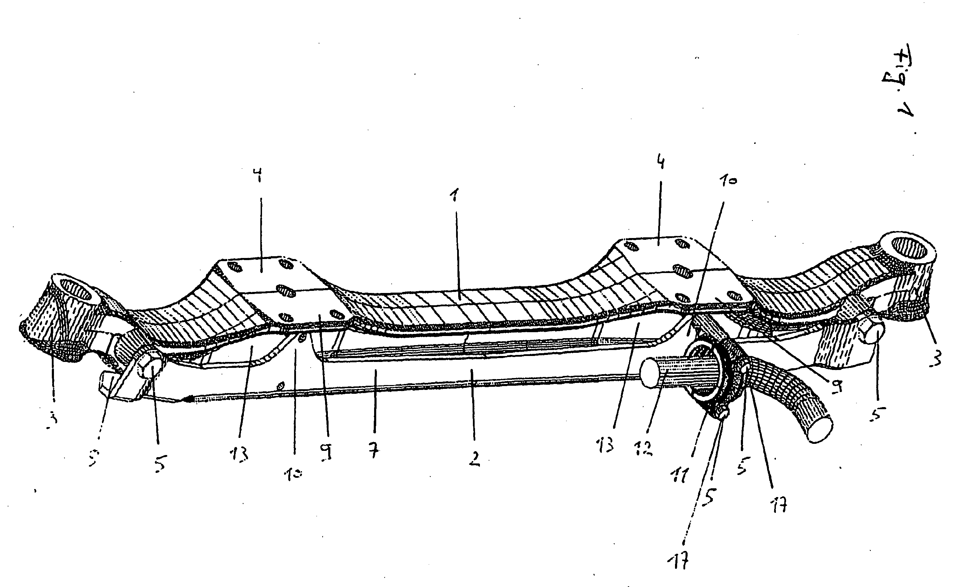

Fig. 1 zeigt in Gesamtansicht einen Achskörper 1 mit seitlich an diesem befestigten Winkelprofil 2. Der Achskörper 1 ist als Faustachse ausgebildet, mit an jedem Ende des Achskörpers 1 ausgebildeter Faust 3. Der Achskörper 1 weist je eine Schulter 4 auf, an der das Federblattpaket (nicht gezeigt) zur Anlage kommt. Das Winkelprofil 2 ist mit dem Achskörper 1 im Bereich der Fäuste 3 und an mehreren Stellen im Bereich der Schultern 4 verbunden. Die Verbindung kann mit Hilfe von Schrauben 5 oder Bolzen verwirklicht werden. Es ist auch denkbar, das Winkelprofil 2 mit dem Achskörper 1 zu verschweißen. Das Winkelprofil 2 weist zwei Schenkel 7 und 8 auf, von denen der Schenkel 7 im Bezug zur Fahrbahn aufrecht steht und der Schenkel 8 flächig am unteren der beiden in etwa parallel zur Fahrbahn verlaufenden Stege 9 anliegt. Die beiden Schenkel 7 und 8 des Winkelprofils 2 verlaufen etwa in einem Winkel von 90°. Im Bereich der Schultern 4 weist das Winkelprofil 2 je eine, entgegen der Fahrbahn gerichtete Zunge 10 auf, die eine vergrößerte Anlagefläche zur Aufnahme jeweils mindestens zweier Verbindungspunkte zwischen dem Winkelprofil 2 und dem Achskörper 1 bildet. Im Bereich der hinteren Schulter 4 wird das Winkelprofil 2 mit den Schrauben 5 am Achskörper 1 befestigt, die das Lager 11 des Stabilisators 12 mit dem Achskörper 1 verbinden. Der Stabilisator 12 ist in Fig. 1 nur ausschnittsweise dargestellt. Je nach der erforderlichen Verwindungssteifigkeit kann das Winkelprofil 2 in unterschiedlichen Dicken sowie in unterschiedlichen Längen am Achskörper 1 angeordnet sein. Das Winkelprofil 2 kann auch mehr als zwei Schenkel 7; 8 aufweisen und den Achskörper 1 z. B. an drei Seiten einschließen. Die Versteifung des Achskörpers 1 durch das Winkelprofil 2 kann durch die Anzahl der Verbindungspunkte für die Schrauben 5 bzw. Bolzen zwischen Winkelprofil 2 und Achskörper 1 variiert werden. Es ist davon auszugehen, dass mindestens zwei Verbindungspunkte zwischen dem Winkelprofil 2 und dem Achskörper 1 vorgesehen sind. Vorstellbar ist, dass z. B. am Doppel-T-Profil mehr als ein Winkelprofil 2 angeordnet sind. Denkbar ist, dass z. B. ein U-förmiges Winkelprofil (nicht gezeigt) mit seinem Rücken am Profilsteg 13 anliegt. Ein weiteres Winkelprofil 2 kann z. B. in der aus Fig. 1 erkennbaren Art und Weise am Achskörper 1 angeordnet sein. Der Winkel in dem die Schenkel 7 bzw. 8 des Winkelprofils 2 angeordnet sind, kann je nach Außenprofil des Achskörpers 1 variieren. Denkbar ist dabei, dass der Achskörper 1 wie in Fig. 1 gezeigt, ein Doppel-T-Profil aufweist, der Achskörper 1 kann jedoch auch ein in etwa rundes Außenprofil aufweisen.

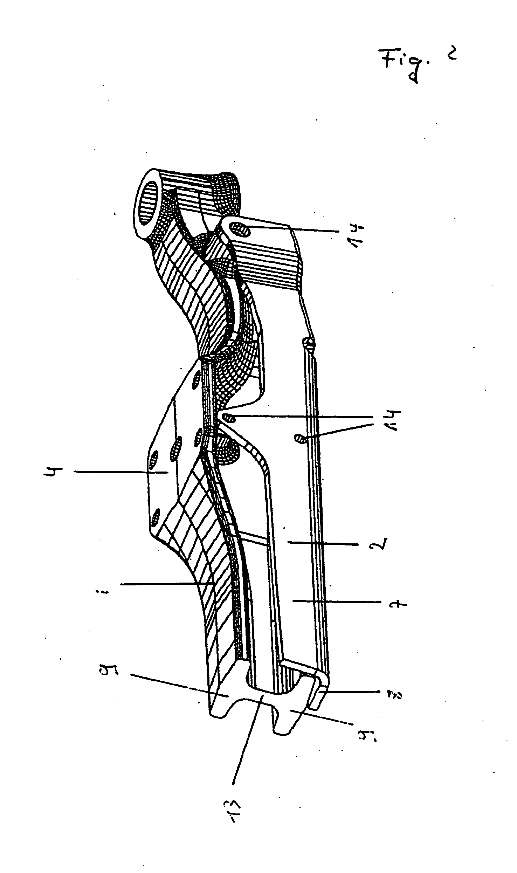

Fig. 2 zeigt einen Achskörper 1 mit einem daran befestigten Winkelprofil 2 entsprechend der Fig. 1, mit dem Unterschied, dass der Achskörper 1 und das Winkelprofil 2 etwa in der Mitte zwischen den beiden Schultern 4 geschnitten sind. Das Winkelprofil 2 liegt mit seinem Schenkel 8 am Steg 9 des Achskörpers 1 an, wogegen der Schenkel 7 des Winkelprofils 2 etwa senkrecht zur Fahrbahn nach oben abgewinkelt ist und an drei Verbindungspunkten 14 am Achskörper 1 anliegt. Die zueinander gewinkelte Anordnung der Schenkel 7 bzw. 8 erhöht die Verwindungssteifigkeit des Winkelprofils 2. Zu einer weiteren Erhöhung der Steifigkeit des Winkelprofils 2 können in diesem weitere z. B. axiale und/oder radial verlaufende Rippen angeordnet sein. Das Winkelprofil 2 kann in unterschiedlichen Längen am Achskörper 1 angeordnet sein. Denkbar ist, dass das Winkelprofil 2 eine U-Form aufweist und den Achskörper 1 zumindest bereichsweise aneinander gegenüberliegenden Flächen des Außenumfanges des Achskörpers 1 umgreift.

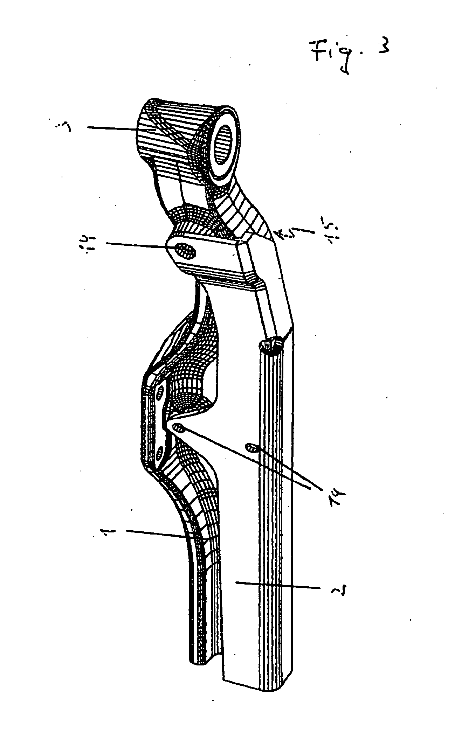

Fig. 3 zeigt in etwa seitlich von unten das an dem Achskörper 1 angeordnete Winkelprofil 2. Fig. 3 macht deutlich, dass das Winkelprofil 2 in Längsrichtung zum Achskörper 1 gesehen der Kröpfung 15 des Achskörpers 1 zur Faust 3 hin angepasst ist.

### Bezugszeichen

- 1.: Achskörper
- 2.: Winkelprofil
- 3.: Faust
- 4.: Schulter
- 5.: Schraube
- 6.:
- 7.: Schenkel
- 8.: Schenkel (anliegend)
- 9.: Steg
- 10.: Zunge
- 11.: Lager
- 12.: Stabilisator
- 13.: Profilsteg
- 14.: Verbindungspunkt
- 15.: Kröpfung
- 16.:
- 17.: Schrauben

## Patentansprüche

1. Starrachse eines Nutzfahrzeugs, insbesondere Lastkraftwagen oder Omnibus, mit einem gegossenen oder geschmiedeten Achskörper, **dadurch gekennzeichnet, dass** der Achskörper (1) an seiner Längsseite durch ein Winkelprofil (2) versteift ist, das an mindestens zwei Seiten des Achskörpers (1) anliegt.

2. Starrachse nach Anspruch 1, **dadurch gekennzeichnet, dass** das Winkelprofil (2) zumindest mit einem Schenkel (7) flächig an dem Achskörper (1) anliegt.

3. Starrachse nach einem der vorhergehenden Ansprüche, **dadurch gekennzeichnet, dass** zumindest ein Schenkel (7) des Winkelprofils (2) in Bezug zur Fahrbahn aufrecht steht und an dem Achskörper (1) befestigt ist.

4. Starrachse nach einem der vorhergehenden Ansprüche, **dadurch gekennzeichnet, dass** der Achskörper (1) ein Doppel-T-Profil aufweist und der aufrecht stehende Schenkel (7) des Winkelprofils (2) etwa parallel zu dem Profilsteg (13) des Achskörpers (1) angeordnet ist.

5. Starrachse nach einem der vorhergehenden Ansprüche, **dadurch gekennzeichnet, dass** das Winkelprofil (2) im Bereich seiner Enden an dem Achskörper (1) befestigt ist.

6. Starrachse nach einem der vorhergehenden Ansprüche, **dadurch gekennzeichnet, dass** mit den Schrauben (17), mit denen ein Stabilisator (12) am Achskörper (1) befestigt ist, gleichen Orts auch das Winkelprofil (2) am Achskörper (1) angeordnet ist.

7. Starrachse nach einem der vorhergehenden Ansprüche, **dadurch gekennzeichnet, dass** das Winkelprofil (2) im Bereich der die Fahrzeugfederung tragenden Platte des Achskörpers (1) an diesem befestigt ist.

## Claims

1. Rigid axle of a commercial vehicle, in particular of a truck or bus, with a cast or forged axle beam, **characterised in that** the axle beam (1) is stiffened on its long side by an angle section (2) which is contact with at least two sides of the axle beam (1).

2. Rigid axle as in Claim 1, **characterised in that** at least one flange (7) of the angle section (2) is in contact with a large area of the axle beam (1).

3. Rigid axle as in one of the foregoing Claims, **characterised in that** at least one flange (7) of the angle section (2) is in an upright position in relation to the road and is fastened to the axle beam (1).

4. Rigid axle as in one of the foregoing Claims, **characterised in that** the axle beam (1) is of double-T section and that the upright flange (7) of the angle section (2) is positioned approximately parallel to the centre section (13) of the axle beam (1).

5. Rigid axle as in one of the foregoing Claims, **characterised in that** the angle section (2) is fastened in the area of its ends to the axle beam (1).

6. Rigid axle as in one of the foregoing Claims, **characterised in that** the angle section (2) is fastened to the axle beam (1) with the same bolts (17) and at the same points as a stabiliser (12) fastened to the axle beam (1).

7. Rigid axle as in one of the foregoing Claims, **characterised in that** the angle section (2) is fastened to the axle beam (1) in the area of the plate bearing the vehicle suspension.

## Revendications

1. Essieu rigide d'un véhicule industriel, en particulier d'un camion ou d'un bus, avec un corps d'essieu coulé en fonte ou forgé, **caractérisé en ce que** le corps d'essieu (1) est rigidifié sur son côté longitudinal par un profilé en équerre (2) qui s'appuie sur au moins deux côtés du corps d'essieu (1).

2. Essieu rigide selon la revendication 1, **caractérisé en ce que** le profilé en équerre (2) repose à plat sur le corps d'essieu (1) au moins à l'aide d'un côté latéral (7)

3. Essieu rigide selon l'une des revendications mentionnées précédemment, **caractérisé en ce qu'**au moins un côté latéral (7) du profilé en équerre (2) est situé à la verticale par rapport à la chaussée et est fixé au corps d'essieu (1).

4. Essieu rigide selon l'une des revendications mentionnées précédemment, **caractérisé en ce que** le corps d'essieu (1) présente un profilé double en T et le côté latéral (7) à la verticale du profilé en équerre (2) est disposé à peu près parallèlement au montant profilé (13) du corps d'essieu (1).

5. Essieu rigide selon l'une des revendications mentionnées précédemment, **caractérisé en ce que** le profilé en équerre (2) est fixé au corps d'essieu (1) au niveau de ses extrémités.

6. Essieu rigide selon l'une des revendications mentionnées précédemment, **caractérisé en ce que** les vis permettent, au même endroit, de fixer un stabilisateur (12) sur le corps d'essieu et de maintenir également le profilé en équerre (2) monté sur le corps d'essieu (1).

7. Essieu rigide selon l'une des revendications mentionnées précédemment, **caractérisé en ce que** le profilé en équerre (2) est fixé au corps d'essieu (1) au niveau de la plaque du corps d'essieu, laquelle supporte la suspension du véhicule.
